# EUROPÄISCHE PATENTANMELDUNG

(11) **EP 2 535 675 A1**
(43) Veröffentlichungstag der Anmeldung: **19.12.2012**
(21) Anmeldenummer: 11170432.6
(22) Anmeldetag: 17.06.2011
(51) Int. Cl.: F25D 3/11, A23L 3/375, F25D 21/04

(54) **Verfahren und Vorrichtung zum Kühlen von Produkten**

(71) Anmelder: Messer France S.A.S., 92816 Puteaux Cedex (FR)
(72) Erfinder: Tebib, Emir, 77410 Gressey (FR)
(74) Vertreter: Münzel, Joachim R.

(57) **Zusammenfassung**

Bei bekannten Einrichtungen zum Kühlen von Produkten werden die zu kühlenden Produkte mittels eines Förderbandes durch eine im Innern eines Kühltunnels angeordnete Kühlzone transportiert, in der sie mit einem kryogenen Kühlmittel in thermischen Kontakt gebracht werden. Das erwärmte Kühlmittel wird anschließend an einer Absauganlage abgeführt. Nachteilig bei den bekannten Einrichtungen ist, dass es zu einem Eindringen von feuchter Außenluft und damit zu Eisbildung in der Absauganlage kommt, weshalb die Einrichtung von Zeit zu Zeit stillgelegt und entfrostet werden muss.

Erfindungsgemäß wird dem abgeführten Gas in der Absaugleitung ein im Vergleich zu den Temperaturen im Kühltunnel warmes gasförmiges Medium, beispielsweise Luft, beigemischt. Temperatur und Menge das zugeführten Mediums sind so bemessen, dass die Absaugleitung nicht zufriert. Das zugeführte Medium wird mit einer geeigneten, vorzugsweise elektrischen Heizeinrichtung erwärmt und entweder mittels Venturi-Düse in die Absaugleitung eingesaugt oder über eine Fördereinrichtung zugeführt.

## Beschreibung

Die Erfindung betrifft ein Verfahren zum Kühlen von Produkten in einem Kühltunnel, bei dem die Produkte in einer mit der Umgebungsatmosphäre strömungsverbundenen Kühlzone des Kühltunnels durch Wärmekontakt mit einem gasförmigen Kühlmittel gekühlt werden, wobei das Kühlmittel über eine Zuführung in die Kühlzone eingebracht wird und das beim Wärmekontakt mit den Produkten verbrauchte Kühlmittel über eine mit einer Absaugeinrichtung verbundenen Absaugleitung aus der Kühlzone abgeführt wird. Die Erfindung betrifft des Weiteren eine entsprechende Vorrichtung.

Derartige Verfahren bzw. Vorrichtungen, die beispielsweise zum Haltbarmachen von Lebensmitteln für Mensch und Tier oder von pharmazeutischen Produkten zum Einsatz kommen, sind beispielsweise in der EP 0 667 503 A1, der EP 1 176 376 A1 oder der DE 10 2004 020 180 A1 beschrieben. Je nach Art des Transports der Produkte durch den Kühltunnel unterscheidet man Anlagen mit linear sich durch die Kühlzone hindurcherstreckendem Förderband (Linearkühler) oder spiralförmigem Förderband (Spiralkühler), oder es können mehrere übereinander angeordnete Transportbänder vorgesehen sein, wobei die zu kühlenden Produkte nacheinander alle Bänder durchlaufen (Etagenkühler). Als Kühlmittel wird häufig ein Flüssiggas, beispielsweise flüssiger Stickstoff oder flüssiges Kohlendioxid eingesetzt, das im Bereich der Kühlzone verdampft und dabei den Produkten Wärme entzieht. Da das Kühlmittel aus Gründen des Arbeitsschutzes nicht in den unmittelbaren Umgebungsbereich der meist in einer Halle aufgestellten Anlage gelangen darf, wird das "verbrauchte", d.h. das aufgrund des Wärmekontakts mit den Produkten erwärmte, Kühlmittel mittels einer Absaugeinrichtung aus der Kühleinrichtung abgeführt und unmittelbar ins Freie geleitet bzw. der Rückgewinnung oder einer anderweitigen Verwendung zugeführt.

Problematisch bei den Kühleinrichtungen nach dem Stand der Technik ist, dass beim Einbringen der zu kühlenden Gegenstände in die Behandlungszone feuchte Außenluft eindringen kann. Diese Luft gelangt zusammen mit dem Kühlmittel in die Absaugeinrichtung, wo die in der Luft enthaltende Feuchtigkeit aufgrund der dort herrschenden tiefen Temperaturen kondensiert und sich in Form von Eis an den Leitungen festsetzt. In der Folge kann es zu einer Beeinträchtigung der Absaugleistung bis hin zu einem völligen Ausfall der Absaugeinrichtung kommen, mit der Konsequenz, dass das Kühlmittel aus dem Kühltunnel austritt und das Bedienpersonal gefährdet. Um ein Zufrieren der Absaugeinrichtung zu verhindern, muss daher die Kühleinrichtung in regelmäßigen Zeitabständen stillgelegt und enteist werden.

In der EP 1 808 086 A1 wird vorgeschlagen, vor dem Produkteingang und dem Produktausgang eines Kühltunnels jeweils Trockenkammern anzuordnen, deren Luftinhalt laufend mittels eines Adsorberentfeuchters getrocknet wird. Somit gelangt nur vorgetrocknete Luft in das Innere des Kühltunnels hinein und die Vereisung der Absauganlage wird verzögert oder ganz vermieden. Die Aufnahmefähigkeit des Entfeuchters ist jedoch begrenzt, so dass auch bei dieser Ausgestaltungen von Zeit zu Zeit Wartungspausen erforderlich sind, um den Enfeuchter zu regenerieren.

Aufgabe der vorliegenden Erfindung ist daher, eine Verfahren zum Kühlen von Produkten unter Zuhilfenahme eines Kühltunnels, bzw. eine entsprechende Kühleinrichtung zu schaffen, die einfach im Aufbau ist und bei der regelmäßige, durch Eisbildung bedingte Betriebspausen vermieden werden.

Gelöst ist diese Aufgabe bei einem Verfahren zum Kühlen oder Frosten von Produkten der eingangs genannten Art und Zweckbestimmung dadurch, dass der Absaugleitung ein warmes, gasförmiges Medium zugeführt wird, das in der Absaugleitung mit dem erwärmten Kühlmedium vermischt wird.

Erfindungsgemäß wird dem kalten, verbrauchten Kühlmittel in der Absaugleitung also ein warmes, gasförmiges Medium zugeführt. Dabei kann es sich beispielsweise um ein Inertgas, etwa Stickstoff oder ein Edelgas handeln, oder um Luft. Das warme, gasförmige Medium vermischt sich in der Absaugleitung mit dem verbrauchtem Kühlmittel und erhöht damit die Temperatur des insgesamt in der Absaugleitung vorhandenen Gases. Als "warm" soll hier ein Medium mit einer Temperatur von über 0°C verstanden werden, bevorzugt ein Medium mit einer Temperatur, die gleich oder größer der Umgebungstemperatur (18°C) liegt. Die Menge und/oder die Temperatur des warmen, gasförmigen Mediums muss dabei so gewählt werden, dass aufgrund der Vermischung in der Absaugleitung eine Temperatur herrscht, bei der keine Vereisung mehr auftritt oder eine Vereisung zumindest deutlich reduziert ist. Dadurch können vereisungsbedingte Betriebspausen vermieden und auf aufwändige Trocknungseinrichtungen im Eingangs- und Ausgangsbereich des Kühltunnels verzichtet werden.

Um sicherzustellen, dass die Temperatur des Gemisches aus verbrauchtem Kühlmittel und warmem Medium ausreicht, um eine Vereisung der Absaugleitung zu verhindern ist es vorteilhaft, das warme, gasförmige Medium zusätzlich zu beheizen, beispielsweise auf eine Temperatur von 20 ° bis 100°C, bevorzugt 50°C bis 80°. Gemäß einer besonderen Ausbildung des Erfindungsgedankens wird die Temperatur des zugeführten Mediums dabei kontinuierlich in Abhängigkeit von einer in der Absaugleitung gemessenen Temperatur geregelt.

Eine vorteilhafte Weiterbildung der Erfindung sieht vor dass das warme, gasförmige Medium aufgrund des Venturi-Effekts in die Absaugleitung einspeist wird. Das Medium wird also aufgrund der Abströmung des verbrauchten Kühlmittels in die Absaugleitung eingesogen. Auf eine Fremdförderung des Mediums, etwa mittels einer Pumpe, kann dadurch verzichtet werden, oder eine solche kann kleiner ausgelegt werden, also dies ohne Ausnutzung des Venturieffekts zur Erfüllung der erfindungsgemäßen Aufgabe nötig wäre.

Bevorzugt kommt als Kühlmittel ein kryogenes Kühlmittel zum Einsatz. Ein besonders bevorzugtes kryogenes Kühlmittel ist Kohlendioxid, das im flüssigen Zustand unter Druck herangeführt und beim Eindüsen in die Kühlzone entspannt wird, wobei es unter starker Abkühlung in ein Gemisch aus kaltem Kohlendioxidgas und Trockeneisschnee übergeht. Eine Alternative zu Kohlendioxid stellt flüssiger Stickstoff dar, der beim Wärmekontakt mit dem Produkt in der Kühlzone verdampft.

Die Aufgabe der Erfindung wird auch durch eine Vorrichtung zum Kühlen oder Gefrieren von Produkten mit den Merkmalen des Patentanspruchs 5 gelöst. Die erfindungsgemäße Vorrichtung ist mit einem Kühltunnel, der eine sich zwischen einem Produkteingang und einem Produktausgang erstreckende Kühlzone aufweist, einer Einrichtung zum Zuführen eines Kühlmittels in die Kühlzone und einer einer Absaugeinrichtung zugeordneten Absaugleitung zum Abführen von verbrauchtem Kühlmittel aus der Kühlzone ausgerüstet. Weiterhin ist die Absaugleitung über ein Zuführleitung mit einem Speichervolumen für eine warmes gasförmiges Medium strömungsverbunden ist und es sind Mittel vorgesehen, um das warme, gasförmige Medium in die Absaugleitung zu fördern.

Im Betrieb der erfindungsgemäßen Vorrichtung wird über die Zuführleitung also beständig ein warmes, gasförmiges Medium in die Absaugleitung hinein gefördert, das sich dort mit dem verbrauchten Kühlmittel vermischt und dadurch die Temperatur in der Absaugleitung erhöht. Die Vereisung der Absaugleitung wird auf diese Weise deutlich gemindert oder sogar völlig verhindert. Die Temperatur des Kühlmediums unmittelbar vor dem Durchmischen mit dem Kältemittel in der Absaugleitung beträgt bevorzugt Umgebungstemperatur (18°C) oder darüber. Die apparativen Komponenten der erfindungsgemäßen Vorrichtung sollten so ausgelegt sein, dass ein Mengenstrom an warmem Medium zugeführt werden kann, der die Temperatur der Absaugleitung nach der Durchmischung des warmen Mediums mit dem Kühlmittel auf einen Wert bringt, bei dem eine Vereisung der Absaugleitung verhindert oder zumindest so weit reduziert wird, dass die Vereisung den laufenden Betrieb der erfindungsgemäßen Vorrichtung nicht behindert wird. Dies ist insbesondere der Fall, wenn in der Absaugleitung nach Durchmischen von Kältemittel und Medium eine Temperatur von 0°C oder darüber herrscht. Als ,,Speichervolumen" für das warme, gasförmige Medium kommt beispielsweise ein Tank, ein bestimmter Bereich des Kühltunnels, beispielsweise ein oberhalb der Kühlzone angeordneter Dachraum des Kühltunnels, in dem sich beim Betrieb des Kühltunnels erwärmtes Kühlmittel anreichert, oder aber die Außenumgebung in Betracht. Die erfindungsgemäße Vorrichtung kommt somit ohne Betriebspausen aus, die durch Abtauen der Absaugleitung bedingt sind. Auf eine Trocknungskammer am Ein-/ und oder Ausgang des Kühltunnels kann dann ebenfalls verzichtet werden.

In einer bevorzugten Ausgestaltung der Erfindung ist vorgesehen, dass in der Zuleitung für das gasförmige Medium eine Heizeinrichtung zum Erhitzen des gasförmigen Mediums vorgesehen ist. In der Heizeinrichtung, bei der es sich beispielsweise um eine elektrische Heizeinrichtung handelt oder um einen Wärmetauscher, in dem in thermischer Kontakt des Mediums mit einem Wärmeträgerfluid erfolgt, wird also ein gasförmiges Medium, beispielsweise ein Inertgas oder auch Umgebungsluft, erwärmt und anschließend über die Zuführleitung in die Absaugleitung eingespeist, wo es sich mit dem abgesaugten Kühlmittel vermischt. Die Menge und/oder die Temperatur des Mediums wird dabei vorzugsweise mittels einer Regeleinrichtung so gewählt, dass nach der Vermischung von Medium und abgesaugtem Kühlmittel die Temperatur in der Absaugleitung so hoch ist, dass eine Vereisung der Absaugleitung unterbunden oder zumindest stark reduziert wird.

Zweckmäßigerweise ist die Absaugleitung zumindest abschnittsweise innerhalb der Zuführleitung aufgenommen. Die Absaugleitung wird in diesem Abschnitt also von warmem Medium umströmt und dadurch in radialer Hinsicht von der Außenumgebung abgeschirmt. Auf eine aufwändige Isolation der Absaugleitung kann dort verzichtet werden.

In einer besonders vorteilhaften Ausführungsform der Erfindung erfolgt die Zuführung des Mediums in die Absaugleitung unter Ausnutzung des Venturi-Effekts. Dazu ist in der Absaugleitung eine Venturi-Düse vorgesehen, an der eine Strömungsverbindung zur Zuführleitung für das Medium besteht. Dazu weist die Absaugöffnung eine oder mehrere Engstellen auf, an denen eine Strömungsverbindung zur Zuführleitung besteht. Bei dieser Ausgestaltung ist eine Fremdförderung des Mediums zur Absaugleitung, etwa mittels einer Pumpe, nicht zwingend erforderlich.

Eine andere Ausgestaltung der Erfindung sieht vor, eine zusätzliche Fördereinrichtung zur Förderung des gasförmigen Mediums zur Absaugleitung vorzusehen. Eine solche Förderung ist insbesondere dann vorteilhaft, wenn der Venturieffekt nicht ausreicht, um eine hinreichende Erwärmung der Absaugleitung sicherzustellen, oder wenn der Mengenstrom des zugeführten gasförmigen Mediums möglichst genau geregelt werden soll. Eine solche Fördereinrichtung kann ergänzend oder anstelle der vorgenannten Venturi-Düse vorgesehen sein, und innerhalb der Zuführleitung in Strömungsrichtung vor oder hinter einer Heizeinrichtung zum Erhitzen des Mediums angeordnet sein.

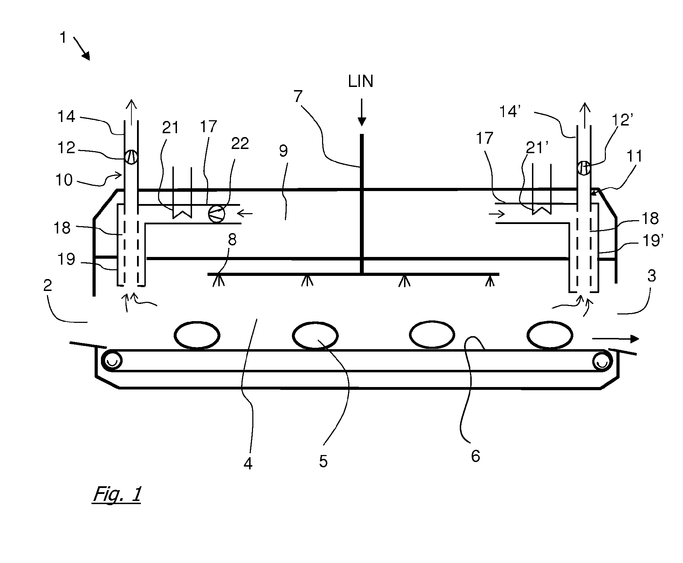

Anhand der Zeichnung (Fig. 1) soll ein Ausführungsbeispiel der Erfindung näher erläutert werden. Die einzige Zeichnung zeigt schematisch eine erfindungsgemäße Vorrichtung zum Kühlen von Produkten.

Bei der in der Zeichnung gezeigten Kühleinrichtung 1 handelt es sich um einen Linearkühler, wie er häufig zum Kühlen oder Frosten von Lebensmitteln verwendet wird. Die Vorrichtung umfasst einen langgestreckten Kühltunnel 1, der an seinen Stirnenden einen Produkteingang 2 und einen Produktausgang 3 aufweist. Zwischen dem Produkteingang 2 und dem Produktausgang 3 erstreckt sich eine Kühlstrecke 4, durch die die zu kühlenden Produkte 5 auf einem Förderband 6 hindurch transportiert werden. In der Kühlstrecke 4 werden die Produkte mit einem kryogenen Kältemittel beaufschlagt, das aus einem hier nicht gezeigten Tank über eine Kühlmittelzuleitung 7, die ausgangsseitig mit Sprühdüsen 8 ausgerüstet ist, in die Kühlstrecke 4 eingesprüht wird. Bei dem Kühlmittel handelt es sich im Ausführungsbeispiel um Stickstoff, der als kaltes Gas oder als Flüssigstickstoff (LlN) auf die Produkte 5 aufgesprüht wird. Alternativ handelt es sich bei dem Kühlmittel um Kohlendioxid, das aus einer hier nicht gezeigten Quelle unter Druck in flüssigem Zustand herangeführt und beim Eintritt in das Innere des Kühltunnels 1 entspannt wird unter starker Abkühlung in Kohlendioxidgas und Trockeneis übergeht.

Um zu verhindern, dass Feuchtigkeit auf der Außenwand des Kühltunnels 1 kondensiert, ist die Kühlstrecke 4 von einer thermisch Isolierten und weitgehend gasdicht abgeschlossenen Wandung umgeben, die im Bereich des Produkteingangs 2 und des Produktausgangs 3 unterbrochen ist. Oberhalb der Kühlstrecke 4 ist im Kühltunnel ein Dachraum 9 vorgesehen, der durch eine thermisch isolierte Platte von der Kühlstrecke 4 abgetrennt ist und innerhalb dessen sich eine Atmosphäre befindet, die aus Umgebungsluft mit darin angereichertem, auf nahezu Umgebungstemperatur erwärmtem Kühlmittel besteht.

Das erwärmte Kühlmittelgas wird über im Bereich des Produkteingangs 2 und des Produktausgangs 3 angeordnete Absaugeinrichtungen 10, 11 aus dem Kühltunnel 1 abgesaugt und ins Freie geleitet oder einer anderen Verwendung zugeführt. Die Absaugeinrichtungen 10 sind so ausgelegt, dass im Wesentlichen so viel Gas abgesaugt wird, wie an Kühlmittel in den Kühltunnel 1 zugeführt wird. Dadurch soll insbesondere sichergestellt werden, dass kein Kühlmittel in den Außenbereich der Vorrichtung gelangt und das Bedienpersonal gefährdet. Die Absaugeinrichtungen 10, 11 umfassen Fördereinrichtungen 12, 12', die jeweils innerhalb einer Absaugleitung 14, 14' angeordnet sind.

Vom Innern des Dachraums 9 gehen zwei Zuführleitungen 17, 17' aus, die jeweils an Strömungsöffnungen 18 mit einer Absaugleitung 14, 14' strömungsverbunden sind. Bei den Strömungsöffnungen 18 handelt es sich um eine Anzahl runder oder länglicher Bohrungen, die in der Außenwand der jeweiligen Absaugleitung 14, 14 abgeordnet sind. Im Bereich der Absaugleitung 14, 14' umfasst die jeweilige Zuführleitung 17, 17' ein nach unten (geodätisch gesehen) geschlossenes Rohrstück 19, 19', das die jeweilige Abströmleitung 14, 14' radial vollständig umschließt. Stromauf zu den Strömungsöffnungen 18 ist in den Zuführleitungen 17, 17' jeweils eine Heizeinrichtung 21, 21', im Ausführungsbeispiel eine elektrische Heizung, vorgesehen, deren Aufgabe darin besteht, durch die Zuführleitung 17, 17' strömendes Gas zu erwärmen.

Beim Betrieb der Vorrichtung werden die Produkte 5 vom Produkteingang 2 des Kühltunnels 1 zum Produktausgang 3 durch die Kühlstrecke 4 transportiert. In der Kühlstrecke 4 werden sie durch thermischen Kontakt mit dem aus den Düsen 8 injizierten Kühlmittel gekühlt. Das beim Wärmekontakt mit den Produkten 5 erwärmte Kühlmittel wird von den Absaugeinrichtungen 10, 11 abgezogen, durch die Absaugleitungen 14, 14' abgeführt und beispielsweise einer weiteren Verwendung zugeführt oder in die Umgebungsatmosphäre abgegeben. Im Bereich des Produkteingangs 2 und des Produktausgangs 3 kommt es dabei zu turbulenten Strömungen, aufgrund derer feuchte Umgebungsluft in die Kühlstrecke 4 gelangt. Diese feuchte Umgebungsluft gelangt mit dem kalten gasförmigen Kühlmittel in die Absaugleitungen 14, 14' und kann dort zu Vereisungen führt. Um dies zu vermeiden, wird dem Kühlmittel in den Absaugleitungen 14, 14' warme Luft zugeführt. Diese warme Luft stammt aus dem Dachraum 9 und wird aufgrund des an den Strömungsöffnungen 18 wirkenden Venturieffekts in die jeweilige Ansaugleitung 14, 14' eingesaugt und durchmischt sich dort mit dem abströmenden Kühlmittel. Um sicherzustellen, dass es innerhalb der Absaugleitungen 14, 14,' nicht mehr zu Vereisungen kommen kann, wird die zugeführte Luft mittels der Heizeinrichtungen 21, 21' erhitzt auf eine Temperatur erhitzt, die ausreicht, um nach der Vermischung der erhitzten Luft mit dem erwärmten Kühlmittel innerhalb der Absaugleitungen 14, 14' eine Temperatur zu erzielen, bei der die Bildung von Eis unterbunden oder zumindest so weit reduziert wird, dass sie den laufenden Betrieb der Vorrichtung nicht behindert, also insbesondere eine Temperatur von 0°C oder darüber.

Alternativ oder ergänzend zu der oben genannten Ausnutzung des Venturi-Effekts kann auch eine innerhalb der Zuführleitung 17, 17' angeordnete Fördereinrichtung 22 (wie in der Zeichnung am Beispiel der Zuführleitung 17 gezeigt) zum Einsatz kommen, um die warme Luft in die Ansaugleitung 14, 14' zu fördern und damit einen höheren Mengenstrom zu erzielen, als bei alleiniger Ausnutzung des Venturi-Effekts. Der von der Fördereinrichtung 22 geförderte Mengenstrom kann dabei zweckmäßigerweise variiert und den jeweiligen Erfordernissen angepasst werden. Eine hier nicht gezeigte Steuereinrichtung, die mit den Heizeinrichtungen 21, 21' und hier gleichfalls nicht gezeigten Temperatursensoren im Innern der Absaugleitungen 14, 14' in Datenverbindung stehen, ermöglicht die Regelung der Heizeinrichtung 21, 21' und/oder der Fördereinrichtung 22 in Abhängigkeit von in den jeweiligen Absaugleitungen 14, 14' gemessenen Temperaturen.

Anstelle des hier gezeigten linear aufgebauten Kühltunnels 1 können auch andere Kühltunneltypen mit entsprechenden Einrichtungen ausgerüstet werden, beispielsweise Spiralkühler oder Etagenkühler; eine gesonderte Einrichtung zum Trocknen oder Vorwärmen der Atmosphäre in den Eingangsbereichen ist erfindungsgemäß nicht mehr erforderlich.

### Bezugszeichenliste

- 1: Kühltunnel
- 2: Produkteingang
- 3: Produktausgang
- 4: Kühlstrecke
- 5: Produkt
- 6: Förderband
- 7: Kühlmittelzuleitung
- 8: Sprühdüse
- 9: Dachraum
- 10: Absaugeinrichtung
- 11: Absaugeinrichtung
- 12, 12': Fördereinrichtung
- 13: -
- 4, 14': Absaugleitung
- 15: -
- 16: -
- 7, 17': Zuführleitung
- 18: Strömungsöffnungen
- 19, 19': Rohrstück
- 20: -
- 21 , 21': Heizeinrichtung
- 22: Fördereinrichtung

## Patentansprüche

1. Verfahren zum Kühlen von Produkten (5) in einem Kühltunnel (1), bei dem die Produkte (5) in einer mit der Umgebungsatmosphäre strömungsverbundenen Kühlzone (4) des Kühltunnels (1) durch Wärmekontakt mit einem gasförmigen Kühlmittel gekühlt werden, wobei das Kühlmittel über eine Zuführung (7) in die Kühlzone (4) eingebracht wird und das beim Wärmekontakt mit den Produkten verbrauchte Kühlmittel über eine mit einer Absaugeinrichtung (12) verbundenen Absaugleitung (14, 14') aus der Kühlzone (3) abgeführt wird,
**dadurch gekennzeichnet,**
**dass** der Absaugleitung (14, 14') ein warmes, gasförmiges Medium zugeführt wird, das in der Absaugleitung (14, 14') mit dem verbrauchten Kühlmedium vermischt wird.

2. Verfahren nach Anspruch 1, **dadurch gekennzeichnet, dass** das warme, gasförmige Medium vor seiner Zuführung an die Absaugleitung (14, 14') erhitzt wird.

3. Verfahren nach Anspruch 1 oder 2, **dadurch gekennzeichnet, dass** das warme, gasförmige Medium aufgrund des Venturi-Effekts in die Absaugleitung (14, 14') eingesaugt wird.

4. Verfahren nach einem der vorhergehenden Ansprüche, **dadurch gekennzeichnet, dass** als Kühlmittel ein kroygenes Kühlmittel zum Einsatz kommt, beispielsweise flüssiges oder kaltes gasförmiges Kohlendioxid oder flüssiger oder kalter gasförmiger Stickstoff.

5. Vorrichtung zum Kühlen oder Gefrieren von Produkten, mit einem Kühltunnel (1), der eine sich zwischen einem Produkteingang (2) und einem Produktausgang (3) erstreckende Kühlzone (4) aufweist, einer Einrichtung zum Zuführen eines Kühlmittels in die Kühlzone (4) und einer einer Absaugeinrichtung (10) zugeordneten Absaugleitung (14, 14') zum Abführen von verbrauchtem Kühlmittel aus der Kühlzone (4),
**dadurch gekennzeichnet,**
**dass** die Absaugleitung (14, 14') über ein Zuführleitung (17, 17') mit einem Speichervolumen für eine warmes gasförmiges Medium strömungsverbunden ist und Mittel vorgesehen sind, um das warme, gasförmige Medium in die Absaugleitung (14, 14') zu fördern.

6. Vorrichtung nach Anspruch 5, **dadurch gekennzeichnet,**
**dass** in der Zuführleitung (17, 17') eine Heizeinrichtung (21, 21') zum Erhitzen des warmen, gasförmigen Mediums vorgesehen ist.

7. Vorrichtung nach Anspruch 5 oder 6, **dadurch gekennzeichnet, dass** die Absaugleitung (14, 14') zumindest abschnittsweise innerhalb der Zuführleitung (17, 17') aufgenommen ist.

8. Vorrichtung nach einem der Ansprüche 5 bis 7, **dadurch gekennzeichnet, dass** in der Absaugleitung (14, 14') eine Venturi-Düse vorgesehen ist, an der eine Strömungsverbindung zur Zuführleitung (17, 17') für das Medium besteht.

9. Vorrichtung nach einem der Ansprüche 5 bis 8, **dadurch gekennzeichnet, dass** in der Zuführleitung (17, 17') eine Fördereinrichtung (22) zur Förderung des Mediums zur Absaugleitung (14, 14') vorgesehen ist.
